Europäisches Patentamt

European Patent Office

Office européen des brevets

(11) Veröffentlichungsnummer: **0 217 433**
**B1**

(12) **EUROPÄISCHE PATENTSCHRIFT**

(45) Veröffentlichungstag der Patentschrift:
03.05.89

(51) Int. Cl.⁴: **C04B 18/02**, C04B 18/04,
B09B 3/00, C02F 11/00

(21) Anmeldenummer: 86201473.5

(22) Anmeldetag: 27.08.86

(54) Verfahren zur Agglomeration von mineralischen Schlämmen.

(30) Priorität: 25.09.85 DE 3534139

(43) Veröffentlichungstag der Anmeldung:
08.04.87 Patentblatt 87/15

(45) Bekanntmachung des Hinweises auf die Patenterteilung:
03.05.89 Patentblatt 89/18

(84) Benannte Vertragsstaaten:
BE DE FR GB IT NL SE

(56) Entgegenhaltungen:
EP-A- 0 168 532
AT-B- 299 789
DE-A- 2 205 374
DE-A- 2 917 123
DE-A- 3 150 993
FR-A- 2 218 389
GB-A- 2 142 006
NL-A- 8 302 478

CHEMICAL ABSTRACTS, Band 102, 1985, Seite 401,
Nr. 31013k, Columbus, Ohio, US

(73) Patentinhaber: METALLGESELLSCHAFT AG,
Reuterweg 14 Postfach 3724, D-6000 Frankfurt/M.1(DE)

(72) Erfinder: Boss, Karl-Heinz, Vor der Kuppe 5, D-6380 Bad
Homburg v.d.H.(DE)
Erfinder: Cappel, Fred, Dr., Schopenhauerstrasse 13,
D-6072 Dreieich(DE)
Erfinder: Hankel, Dirk, Dr., Wiesenstrasse 3,
D-6052 Mühlheim 3(DE)

(74) Vertreter: Rieger, Harald, Dr., Reuterweg 14,
D-6000 Frankfurt am Main(DE)

## Beschreibung

Die Erfindung betrifft ein Verfahren zur Herstellung von festen Agglomeraten aus stichfesten, mineralischen Schlämmen, die organische Bestandteile bis zu 10% enthalten.

Solche Schlämme fallen insbesondere beim Ausbaggern von Häfen oder Flüssen an und werden auch als Schlick bezeichnet. Ihre Trockensubstanz besteht hauptsächlich aus mineralischen Stoffen und bis zu etwa 10% aus organischen Stoffen, bezogen auf trockene Substanz. Sie enthalten Schwermetalle, wie Blei, Zink, Cadmium, Chrom usw. Ihr Wassergehalt liegt im allgemeinen über 60%. Durch Entwässern kann der Wassergehalt zwar gesenkt werden, liegt aber immer noch sehr hoch. Diese Schlämme ergeben wegen ihres hohen Wassergehaltes und ihres Gehaltes an Schwermetallen und organischen Bestandteilen beträchtliche Deponie-Probleme.

Aus DE-A 3 150 993 ist ein Verfahren bekannt, bei dem aus feinkörnigen Sedimenten Pellets hergestellt werden, wobei durch eine schockartige Temperaturbehandlung in einem Drehrohrofen eine geschlossene Sinterhaut an der Oberfläche der Pellets erzeugt wird, was einen Einschluß der Inhaltsstoffe der Pellets bewirkt.

Der Erfindung liegt die Aufgabe zugrunde, solche Schlämme in ein verwertbares oder gut deponierbares Produkt zu verwandeln.

Die Lösung dieser Aufgabe erfolgt erfindungsgemäß dadurch, daß der stichfeste Schlamm mit einem Wassergehalt von 60–30% durch Pressen in Formlinge geformt wird, die feuchten Formlinge auf einem Wanderrost chargiert und mit heißen sauerstoffhaltigen Gasen von 500–900°C behandelt werden, bis die Formlinge etwa die Temperatur der heißen sauerstoffhaltigen Gase aufweisen, jedoch eine Temperatur von 950°C nicht überschreiten, die trockenen Formlinge anschließend mit heißen sauerstoffhaltigen Gasen von 1100–1160°C geklinkert werden und die geklinkerten Formlinge gekühlt werden. Der Ausdruck "stichfest" bedeutet, daß der Schlamm mit einem Spaten oder einer Schaufel abgestochen werden kann. Der Schlamm mit dem geforderten Wassergehalt läßt sich durch eine Preßbehandlung in Formlinge formen. Das Pressen kann in Strangpressen, Walzenpressen oder dergl. erfolgen, wobei auch unter Vakuum gearbeitet werden kann. Die feuchten Formlinge werden mit heißen sauerstoffhaltigen Gasen von 500–900°C unter oxidierenden Bedingungen behandelt. Dabei erfolgt zunächst eine Trocknung der Formlinge und dann eine Verbrennung der organischen Bestandteile, wenn deren Zündtemperatur erreicht ist. Die Temperatur der heißen Gase wird so gewählt, daß in Abhängigkeit von der Verbrennungswärme der organischen Bestandteile die Temperatur in den Formlingen 950°C nicht übersteigt. Die Behandlung muß so geführt werden, daß die organischen Bestandteile praktisch vollständig entfernt werden, möglichst keine Reduktion von Metallverbindungen erfolgt, und die Verschlackungstemperatur von niedrig schmelzenden Bestandteilen nicht erreicht wird. Die trockenen Formlinge, aus denen die organischen Bestandteile entfernt sind, werden dann mit heißen sauerstoffhaltigen Gasen von 1100–1160°C unter oxidierenden Bedingungen geklinkert. Die Temperatur der heißen Gase und die Dauer der Behandlung werden so eingestellt, daß eine Keramisierung der Formlinge eintritt, jedoch keine Verschlackung. Die meisten Schwermetalle werden vollständig oder zu über 90% eingebunden. Der Rest kann mit relativ geringem Aufwand aus den Abgasen abgeschieden werden.

Eine vorzugsweise Ausgestaltung besteht darin, daß die feuchten Formlinge mit heißen sauerstoffhaltigen Gasen von 600–800°C behandelt werden. Dadurch wird in den meisten Fällen eine besonders gute Entfernung der organischen Bestandteile erzielt.

Eine vorzugsweise Ausgestaltung besteht darin, daß die trockenen Formlinge mit heißen sauerstoffhaltigen Gasen von 1130–1150°C behandelt werden. Dadurch wird ein besonders gutes geklinkertes Produkt erzielt.

Eine vorzugsweise Ausgestaltung besteht darin, daß der Wassergehalt des stichfesten Schlammes durch Zumischung von feinkörnigem, geklinkertem Rückgut eingestellt wird. Wenn der prozentuale Wassergehalt des Schlammes über den geforderten Werten liegt, oder wenn der prozentuale Wassergehalt noch weiter gesenkt werden soll, kann dies durch Zugabe von Rückgut in einfacher Weise erfolgen. Dazu wird zunächst das feinkörnig anfallende geklinkerte bzw. kalzinierte Material verwendet, und wenn dies nicht ausreicht, wird geklinkertes Material zerkleinert. Auf diese Weise ist eine optimale Einstellung des prozentualen Wassergehaltes für den jeweiligen Betriebsfall möglich.

Eine vorzugsweise Ausgestaltung besteht darin, daß der stichfeste Schlamm mit einem Wassergehalt von 40–35% durch Pressen in Formlinge geformt wird. Dieser Wassergehalt des Schlammes oder der Mischung ergibt besonders gute Ergebnisse.

Eine vorzugsweise Ausgestaltung besteht darin, daß die feuchten Formlinge einen Durchmesser von 5–12 mm haben. Vorzugsweise beträgt der Durchmesser 7–10 mm. Wenn die Formkörper einen kissenförmigen Querschnitt haben, muß eine Querachse diesen Wert aufweisen, während die andere Querachse länger sein kann. Die Länge der Formkörper kann größer sein. Dieser Durchmesser ergibt besonders gute Ergebnisse.

Eine vorzugsweise Ausgestaltung besteht darin, daß dem stichfesten Schlamm vor dem Pressen $CaCO_3$ zur Bremsung des Temperaturanstiegs in den Formlingen während der Behandlung der feuchten Formlinge mit den heißen Gasen von 500–900°C zugegeben wird. Bei der Behandlung der feuchten Formlinge mit den 500–900°C heißen Gasen darf die Temperatur in den Formlingen nicht über 950°C steigen. Durch die Verbrennung der organischen Bestandteile entsteht zusätzliche Wärme, so daß die Temperatur in den Formlingen über 950°C steigen kann, auch wenn die heißen Gase eine Eintrittstemperatur von unter 900°C haben. Die Temperaturerhöhung ist abhängig vom Gehalt an brennbaren organischen Bestandteilen. Wenn durch die Verbrennung der organischen Bestandteile eine Temperatursteigerung in den Formlingen auf über 950°C eintritt, wird CaCO₃, z.B. in Form von Kalkstein, in die Formlinge eingebunden. Durch den Wärmeverbrauch bei der Kalzination des CaCO₃ wirkt das CaCO₃ als Temperaturbremse. Die Menge des zugesetzten CaCO₃ wird entsprechend bemessen.

Eine vorzugsweise Ausgestaltung besteht darin, daß bei der Behandlung der feuchten Formlinge mit den heißen sauerstoffhaltigen Gasen zur Bremsung des Temperaturanstiegs in den Formlingen die Temperatur der heißen Gase nach einiger Zeit gesenkt wird. Mit dieser Maßnahme, evtl. in Verbindung mit einem CaCO₃-Zusatz, kann ebenfalls ein unzulässiger Temperaturanstieg in den Formlingen vermieden werden. Dabei erfolgt die Behandlung der feuchten Formlinge zunächst mit heißen Gasen höherer Temperatur und dann mit heißen Gasen niederer Temperatur. Z.B. erfolgt die Behandlung zunächst mit Gasen von 700°C für 4 min und dann mit Gasen von 500–550°C für weitere 45 min.

Die feuchten Formlinge werden auf einen Wanderrost chargiert und die heißen sauerstoffhaltigen Gase werden durch das Bett der Formlinge geleitet. Der Wanderrost ist mit Windkästen unter dem Obertrum und Gashauben über dem Obertrum ausgerüstet. Die heißen Gase werden aus den Gashauben durch das Bett aus Formlingen in die Windkästen gesaugt. Die Kühlung der kalzinierten Formlinge erfolgt durch Hindurchleiten von Luft. Die aufgeheizte Kühlluft wird in die Gashauben bzw. Brenner geleitet und zur Erzeugung der heißen Gase von 500–900°C und/oder 1100–1160°C benutzt. Das heißeste Abgas aus der Klinkerzone kann ebenfalls zur Erzeugung dieser heißen Gase benutzt werden. Das Abgas aus der Behandlungszone für die feuchten Formlinge wird eventuell nach einer Reinigung in die Atmosphäre abgeführt. Auf einem Wanderrost läßt sich der Prozeß besonders gut steuern.

Eine vorzugsweise Ausgestaltung besteht darin, daß die heißen sauerstoffhaltigen Gase mit einem Unterdruck von 2–7 mbar durch die feuchten Formlinge gesaugt werden. Dabei wird eine sehr gute Trocknung und Verbrennung der organischen Bestandteile erzielt.

Eine vorzugsweise Ausgestaltung besteht darin, daß die heißen sauerstoffhaltigen Gase mit einem Unterdruck von 9–20 mbar durch die trockenen Formlinge gesaugt werden. Bei niedriger Schichthöhe wird im unteren Bereich und bei höherer Schichthöhe im oberen Bereich gearbeitet. Dabei wird eine sehr gute Kalzinierung der trockenen Formlinge erzielt.

Die Erfindung wird anhand von Beispielen und Diagrammen näher erläutert.

Der Hafenschlick bestand überwiegend aus Tonmineralien und Feldspat und enthielt nach einer Trocknung bei 105°C:

| | |
|---|---|
| $C_{gesamt}$ | 7,5% |
| $S_{gesamt}$ | 0,86% |
| Zn | 0,09% |
| Pb | 0,012% |
| Cu | 0,05% |
| Cd | <0,001% |

Die Herstellung der Formlinge erfolgte in einer Strangpresse.

Die Formlinge hatten einen Durchmesser von 10 mm und eine Länge von 20–50 mm.

Die thermische Behandlung der Formlinge erfolgte auf einer Sinterpfanne, die einen inneren Durchmesser von 30 cm hatte.

Die heißen, sauerstoffhaltigen Gase wurden durch Verbrennung von Öl und Gas mit Luft erzeugt und hatten einen Sauerstoffgehalt von über 15%. Die heißen Gase wurden mittels einer Gashaube auf die Beschickung geleitet und durch die Beschickung in einen Windkasten unter der Sinterpfanne gesaugt. Ein Thermoelement ($T_1$) war in der Gashaube angeordnet und ermittelte die Heißgastemperatur. In der Beschickung waren drei weitere Thermoelemente wie folgt angeordnet: 5 cm unter der Oberfläche ($T_2$), in der Mitte ($T_3$) und kurz über dem Rostbelag ($T_4$).

Stichfester Hafenschlick mit 60% anhaftendem Wasser wurde im Trockenschrank auf 40% Feuchtigkeit getrocknet. 100 Teile dieses getrockneten Materials wurden mit 20 Teilen feinkörnigen Rückgutes unter 6,3 mm gemischt. Das Rückgut war in einem vorangegangenen Versuch kalziniert worden. Die resultierende Mischung enthielt etwa 33% Wasser.

Versuch 1

Die feuchte Mischung wurde mit 2% Löschkalk gemischt. Aus dieser Mischung wurden Formlinge mit etwa 33,5% Feuchtigkeit hergestellt. Auf die Roststäbe der Sinterpfanne wurde eine Schicht von 10 cm Höhe aus geklinkertem Material als Rostbelag chargiert. Der Rostbelag wurde in einem vorangegangenen Versuch hergestellt. Auf den Rostbelag wurden feuchte Formlinge in einer Schichthöhe von 20 cm chargiert. Zum Ausgleich der beim Trocknen auftretenden Schrumpfung an den Rändern der Beschickung wurde ein Seitenrand von 2 cm aus bereits kalziniertem Material verwendet.

Die thermische Behandlung erfolgte mit heißen Gasen, die innerhalb von etwa 3 min auf etwa 700°C aufgeheizt und durch die Beschickung gesaugt wurden, wobei der Saugzug etwa 2,5 mbar betrug. Dies erfolgte so lange, bis das Thermoelement $T_4$ etwa 800°C anzeigte. Dann wurde die Heißgastemperatur innerhalb von 5 min auf 1100–1130°C gesteigert und die Behandlung unter ansteigendem Saugzug auf 19 mbar so lange fortgeführt, bis das Thermoelement $T_4$ etwa 6 min lang Temperaturkonstanz anzeigte. Diese Temperatur lag bei 1070°C.

Danach wurde Luft durch die Beschickung von unten nach oben gedrückt, bis die Temperatur auf etwa 150°C gesunken war.

Während der Behandlung mit den 700°C heißen Gasen bewirkte die Verbrennung des organisch gebundenen Kohlenstoffs in den Formlingen eine unzulässige Temperaturerhöhung auf über 950°C. Dies hatte zur Folge, daß die Formlinge in der Unterschicht außen schwach gehärtet, im Innern aber zum Teil gesintert waren.

Die Qualitätsprüfung der geklinkerten Formlinge wurde im Rolltest nach ISO Nr. 3271 durchgeführt. Er ergab einen Feinanteil unter 6,3 mm von 36,3%. Diese Menge war wesentlich höher als die im Versuch eingesetzte Rückgutmenge.

Das geklinkerte Material enthielt:

| $C_{gesamt}$ | 0,02% | |
|---|---|---|
| $S_{gesamt}$ | 0,17% | ≙ 0,43% SO3 |
| Zn | 0,13% | |
| Pb | 0,056% | |
| Cu | 0,07% | |
| Cd | <0,001% | |

Die Entfernung des Kohlenstoffs betrug 99,8% und die des Schwefels 83%. Die Schwermetalle waren fast zu 100% eingebunden.

Versuch 2

Die gleiche feuchte Ausgangsmischung wurde mit 5% Kalkstein-Mehl gemischt. Aus dieser Mischung wurden Formlinge mit etwa 33,25% Feuchtigkeit hergestellt. Sie wurden in einer Schicht von 10 cm auf eine Rostbelagschicht von 20 cm chargiert. Es wurde wieder mit Seitenrand gearbeitet.

Die Heißgastemperatur wurde innerhalb von 4 min auf 650°C gesteigert und die heißen Gase mit einem Saugzug von etwa 3–4 mbar so lange durch die Beschickung gesaugt, bis das Thermoelement $T_4$ 650°C anzeigte. Danach wurde die Heißgastemperatur innerhalb von etwa 6 min auf 1100–1150°C erhöht und die Behandlung unter ansteigendem Saugzug auf etwa 12 mbar so lange fortgeführt, bis das Thermoelement $T_4$ für 2–3 min eine Temperatur von 1130°C anzeigte. Anschließend erfolgte die Kühlung wie im Beispiel 1.

Während der Behandlung mit den heißen Gasen von 650°C bewirkte die Verbrennung des organisch gebundenen Kohlenstoffs in den Formlingen eine Temperatursteigerung auf etwa 850°C.

Die gesamte Schicht der feucht aufgegebenen frischen Formlinge war gleichmäßig hart geklinkert.

Der Rolltest ergab einen Feinanteil unter 6,3 mm von 11,3%. Diese Menge war wesentlich geringer als die im Versuch eingesetzte Rückgutmenge.

Das geklinkerte Material enthielt:

| $C_{gesamt}$ | 0,03% | |
|---|---|---|
| $S_{gesamt}$ | 0,20% | ≙ 0,50% SO3 |
| Zn | 0,11% | |
| Pb | 0,017% | |
| Cu | 0,07% | |
| Cd | <0,001% | |

Die Entfernung des Kohlenstoffs betrug 99,7% und die des Schwefels 79,8%. Die Schwermetalle waren fast zu 100% eingebunden.

Versuch 3

Es wurden Formlinge wie im Versuch 2 hergestellt und in einer Schichthöhe von 15 cm auf eine Rostbelagschicht von 15 cm chargiert. Es wurde wieder mit Seitenrand gearbeitet.

Die Heißgastemperatur wurde innerhalb von 4 min auf 700°C gesteigert und die heißen Gase mit einem Saugzug von etwa 2–3 mbar mit dieser Temperatur etwa 4 min lang durch die Beschickung gesaugt. Danach wurde die Heißgastemperatur bei gleichem Saugzug für etwa 4 min auf 550°C abgesenkt. Danach wurde die Heißgastemperatur innerhalb von 4 min auf etwa 1100°C erhöht. Der Saugzug wurde dabei auf etwa 7 mbar gesteigert. Die Behandlung mit den heißen Gasen von 1100°C erfolgte etwa 8 min lang, bis das Thermoelement $T_4$ etwa für 4 min eine Temperatur von 1130°C anzeigte. Anschließend erfolgte die Kühlung wie im Versuch 1.

Während der Behandlung mit den heißen Gasen von 700 und 550°C bewirkte die Verbrennung des organisch gebundenen Kohlenstoffs in den Formlingen eine Temperatursteigerung auf etwa 950°C.

Die Beschickung aus frischen, feuchten Formlingen war zu 2/3 gut geklinkert, während 1/3 zum Teil Schwachbrand aufwies und als Rückgut zu bezeichnen war.

Der Rolltest ergab einen Feinanteil unter 6,3 mm von 21,7%. Diese Menge entsprach noch nicht der eingesetzten Rückgutmenge.

Das geklinkerte Material enthielt:

| $C_{gesamt}$ | 0,04% | |
|---|---|---|
| $S_{gesamt}$ | 0,22% | ≙ 0,55% SO3 |
| Zn | 0,11% | |
| Pb | 0,018% | |
| Cu | 0,07% | |
| Cd | <0,001% | |

Die Entfernung des Kohlenstoffs betrug 99,5% und die des Schwefels 77,7%. Die Schwermetalle waren fast zu 100% eingebunden.

Die Vorteile der Erfindung bestehen darin, daß die organischen Bestandteile der Schlämme weitgehendst zu $CO_2$ und $H_2O$ verbrannt werden, die Verbrennungswärme im Prozeß genutzt wird, und die Schwermetalle im geklinkerten Produkt mineralisch eingeschlossen sind und damit in nicht auslaugbarer Form vorliegen. Das Produkt kann sehr gut deponiert oder als Baustoff und Füllstoff verwendet werden. Etwaige geringe Mengen an verflüchtigten Schwermetallen können aus dem Abgas gut abgeschieden werden.

**Patentansprüche**

1. Verfahren zur Herstellung von festen Agglomeraten aus stichfesten mineralischen Schlämmen, die organische Bestandteile bis zu etwa 10% enthalten, wobei die Schlämme in Formlinge geformt werden, die Formlinge mittels heißer Gase gesintert und anschließend gekühlt werden, dadurch gekennzeichnet, daß der stichfeste Schlamm mit einem Wassergehalt von 60–30% durch Pressen in Formlinge geformt wird, die feuchten Formlinge auf einen Wanderrost chargiert und heiße sauerstoffhaltige Gase von 500–900°C durch das Bett der Formlinge geleitet werden, bis die Formlinge etwa die Temperatur der heißen sauerstoffhaltigen Gase aufweisen, jedoch eine Temperatur von 950°C nicht überschreiten, die trockenen Formlinge anschließend mit heißen sauerstoffhaltigen Gasen von 1100–1160°C geklinkert werden und die geklinkerten Formlinge gekühlt werden.

2. Verfahren nach Anspruch 1, dadurch gekennzeichnet, daß die feuchten Formlinge mit heißen sauerstoffhaltigen Gasen von 600–800°C behandelt werden.

3. Verfahren nach Anspruch 1 oder 2, dadurch gekennzeichnet, daß die trockenen Formlinge mit heißen sauerstoffhaltigen Gasen von 1130–1150°C behandelt werden.

4. Verfahren nach einem der Ansprüche 1 bis 3, dadurch gekennzeichnet, daß der Wassergehalt des stichfesten Schlammes durch Zumischung von feinkörnigem, geklinkertem Rückgut eingestellt wird.

5. Verfahren nach einem der Ansprüche 1 bis 4, dadurch gekennzeichnet, daß der stichfeste Schlamm mit einem Wassergehalt von 40–35 % durch Pressen in Formlinge geformt wird.

6. Verfahren nach einem der Ansprüche 1 bis 5, dadurch gekennzeichnet, daß die feuchten Formlinge einen Durchmesser von 5–12 mm haben.

7. Verfahren nach einem der Ansprüche 1 bis 6, dadurch gekennzeichnet, daß dem stichfesten Schlamm vor dem Pressen $CaCO_3$ zur Bremsung des Temperaturanstiegs in den Formlingen während der Behandlung der feuchten Formlinge mit den heißen Gasen von 500–900°C zugegeben wird.

8. Verfahren nach einem der Ansprüche 1 bis 7, dadurch gekennzeichnet, daß bei der Behandlung der feuchten Formlinge mit den heißen sauerstoffhaltigen Gasen zur Bremsung des Temperaturanstiegs in den Formlingen die Temperatur der heißen Gase nach einiger Zeit gesenkt wird.

9. Verfahren nach einem der Ansprüche 1 bis 8, dadurch gekennzeichnet, daß die heißen sauerstoffhaltigen Gase mit einem Unterdruck von 2–7 mbar durch die feuchten Formlinge gesaugt werden.

10. Verfahren nach Anspruch 9, dadurch gekennzeichnet, daß die heißen sauerstoffhaltigen Gase mit einem Unterdruck von 9–20 mbar durch die trockenen Formlinge gesaugt werden.

**Claims**

1. Process for producing solid agglomerates from compact mineral sludges which contain organic constituents of up to about 10%, the sludges being formed into formed bodies, the formed bodies being sintered by means of hot gases and subsequently cooled, characterised in that the compact sludge with a water content of 60–30% is formed into formed bodies by pressing, the moist formed bodies are charged onto a travelling grate, and hot oxygen-containing gases at 500–900°C are passed through the bed of formed bodies until the formed bodies are approximately at the temperature of the hot oxygen-containing gases, but do not exceed a temperature of 950°C, the dry formed bodies are then clinkered with hot oxygen-containing gases of 1100–1160°C and the clinkered formed bodies are cooled.

2. Process according to Claim 1, characterised in that the moist formed bodies are treated with hot oxygen-containing gases of 600–800°C.

3. Process according to Claim 1 or 2, characterised in that the dry formed bodies are treated with hot oxygen-containing gases of 1130–1150°C.

4. Process according to one of Claims 1 to 3, characterised in that the water content of the compact sludge is set by the addition of fine-grained, clinkered returns.

5. Process according to one of Claims 1 to 4, characterised in that the compact sludge with a water content of 40–35% is formed into formed bodies by pressing.

6. Process according to one of Claims 1 to 5, characterised in that the moist formed bodies have a diameter of 5–12 mm.

7. Process according to one of Claims 1 to 6, characterised in that $CaCO_3$ is added to the compact sludge before pressing in order to slow down the temperature increase in the formed bodies during the treatment of the moist formed bodies with the hot gases of 500–900°C.

8. Process according to one of Claims 1 to 7, characterised in that during the treatment of the moist formed bodies with the hot oxygen-containing gases, in order to slow down the temperature increase in the formed bodies the temperature of the hot gases is decreased after a while.

9. Process according to one of Claims 1 to 8, characterised in that the hot oxygen-containing gases are drawn through the moist formed bodies at a pressure of 2–7 mbar below atmosphere.

10. Process according to Claim 9, characterised in that the hot oxygen-containing gases are drawn through the dry formed bodies at a pressure of 9–20 mbar below atmosphere.

**Revendications**

1. Procédé de préparation de produits agglomérés solides à partir de boues minéralifères, consistantes et contenant jusqu'à 10% environ de constituants organiques, qui consiste à mettre les éboues sous forme d'ébauches, à fritter les àbauches au moyen de gaz chauds et ensuite à les refroidir, caractérisé en ce qu'il consiste à mettre la boue consistante et ayant une teneur en eau de 60 à 30% sous forme d'ébauches par compression, à charger les ébauches humides sur une grille mobile, et à envoyer des gaz chauds, contenant de l'oxygène et ayant une température de 500 à 900°C, à travers le lit des ébauches jusqu'à ce que les ébauches prennent à peu près la température des gaz chauds contenant de l'oxygène, mais ne dépassent pas une température de 950°C, à mettre ensuite les ébauches sèches sous forme de clinker par des gaz chauds, contenant de l'oxygène et ayant une température de 1100 à 1160°C, et à refroidir les ébauches mises sous forme de clinker.

2. Procédé suivant la revendication 1, caractérisé en ce qu'il consiste à traiter les ébauches humides par des gaz chauds, contenant de l'oxygène et ayant une température de 600 à 800°C.

3. Procédé suivant la revendication 1 ou 2, caractérisé en ce qu'il consiste à traiter les ébauches sèches par des gaz chauds, contenant de l'oxygène et ayant une température de 1130 à 1150°C.

4. Procédé suivant l'une des revendications 1 à 3, caractérisé en ce qu'il consiste à régler la teneur en eau de la boue consistante, par addition de produit recyclé en grain fin et mis sous forme de clinker.

5. Procédé suivant l'une des revendications 1 à 4, caractérisé en ce qu'il consiste à mettre la boue consistante, ayant une teneur en eau de 40 à 35%, sous forme d'ébauches par compression.

6. Procédé suivant l'une des revendications 1 à 5, caractérisé en ce que les ébauches humides ont un diamètre de 5 à 12 mm.

7. Procédé suivant l'une des revendications 1 à 6, caractérisé en ce qu'il consiste à ajouter à la boue consistante, avant la compression, du $CaCO_3$ pour freiner l'élévation de température des ébauches pendant le traitement des ébauches humides par les gaz chauds ayant une température de 500 à 900°C.

8. Procédé suivant l'une des revendications 1 à 7, caractérisé en ce qu'il consiste, pour le traitement des ébauches humides par les gaz chauds contenant de l'oxygène, à abaisser la température des gaz chauds après un certain temps, pour freiner l'élévation de température des ébauches.

9. Procédé suivant l'une des revendications 1 à 8, caractérisé en ce qu'il consiste à aspirer les gaz chauds et contenant de l'oxygène à travers les ébauches humides par une dépression de 2 à 7 mbar.

10. Procédé suivant la revendication 9, caractérisé en ce qu'il consiste à aspirer les gaz chauds et contenant de l'oxygène à travers les ébauches sèches par une dépression de 9 à 20 mbar.

Versuch: 1

Fig.1

Temp. [°C]

Zeit [Min.]

$T_1$ $T_2$ $T_3$ $T_4$

EP 0 217 433 B1

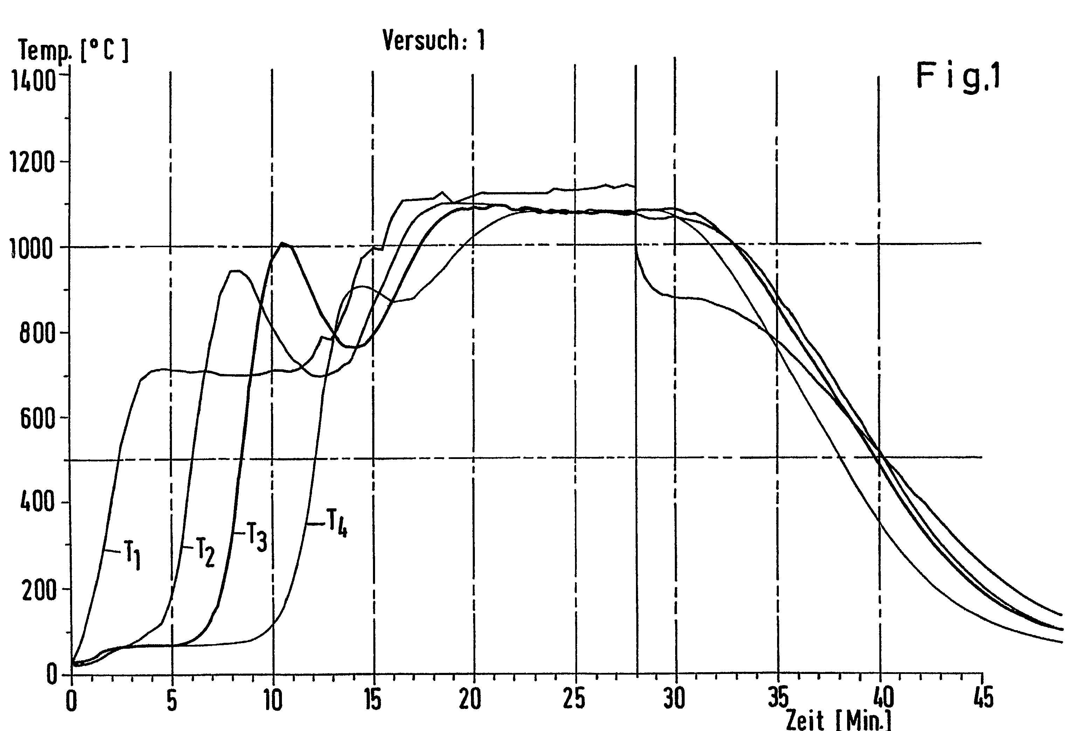

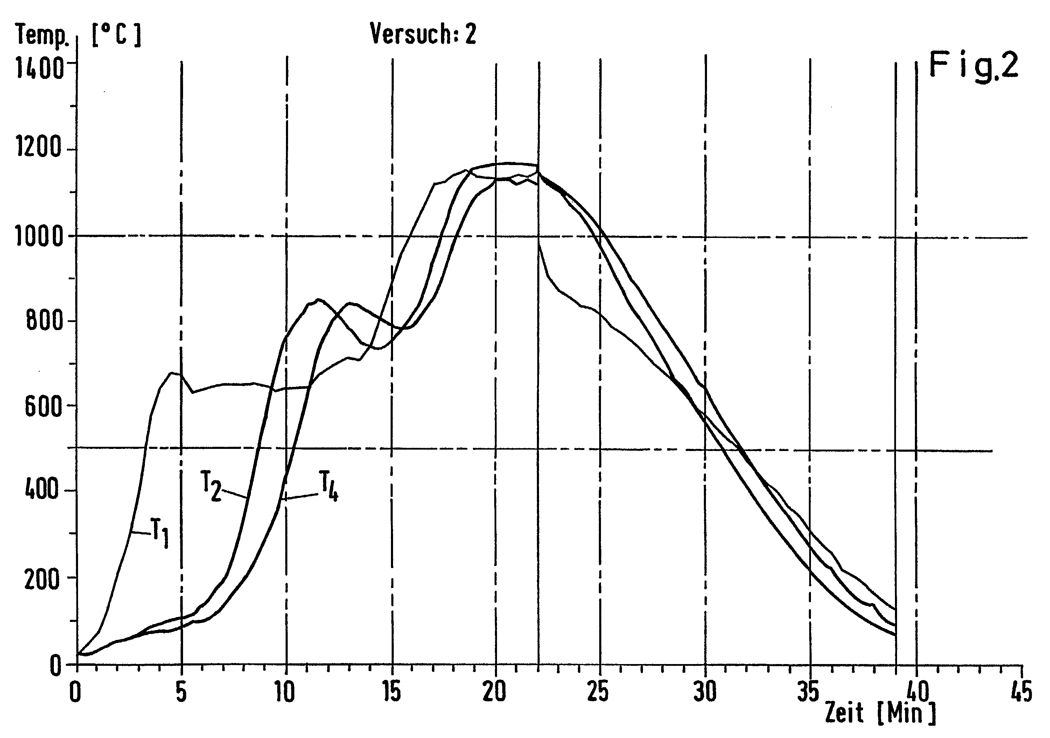

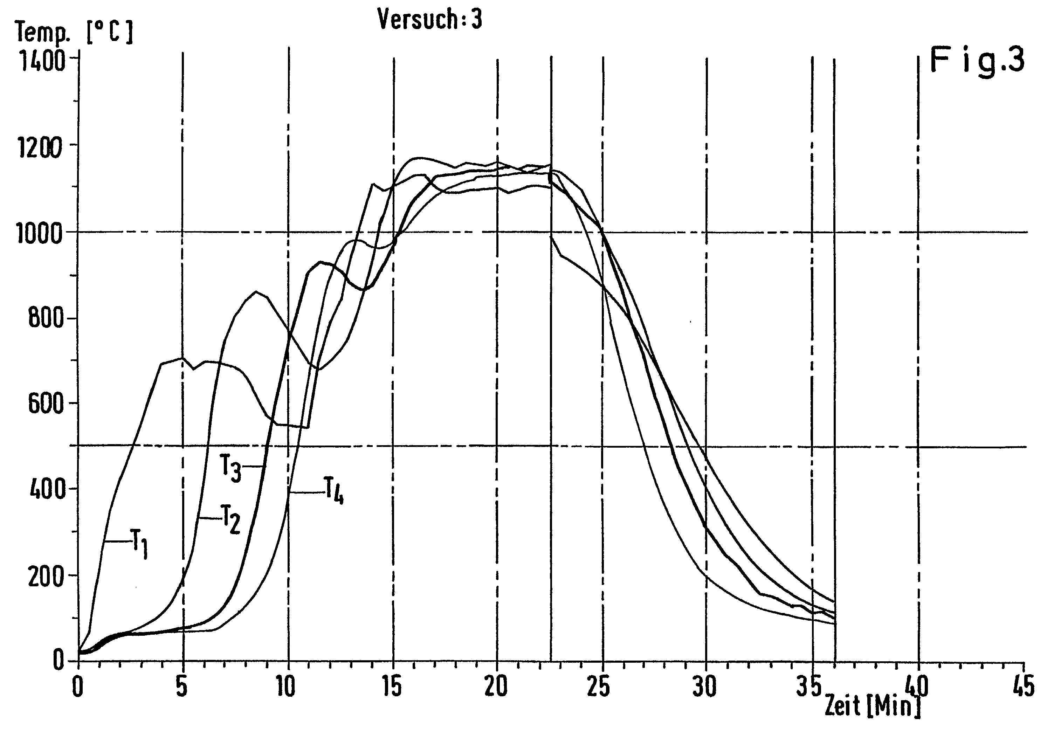

Temp. [°C]    Versuch: 2    Fig.2

EP 0 217 433 B1

Zeit [Min]

Versuch: 3

Fig. 3

Temp. [°C]

EP 0 217 433 B1

Zeit [Min]

$T_1$   $T_2$   $T_3$   $T_4$